# EUROPEAN PATENT APPLICATION

(11) **EP 4 596 926 A1**
(43) Date of publication of application: **06.08.2025**
(21) Application number: 23870581.8
(22) Date of filing: 21.09.2023
(51) Int. Cl.: F16K 1/22

(54) **VALVE**

(30) Priority: 30.09.2022 CN 202211207535
(71) Applicant: Horen Cortp Co., Ltd., Shanghai 200233 (CN)
(72) Inventor: FANG, Zhengwei, Shanghai 200233 (CN)
(74) Representative: Diehl & Partner
(86) International application number: PCT/CN2023/120417
(87) International publication number: WO 2024/067349

(57) **Abstract**

A valve (100), comprising a valve body (10), a valve stem (20), a valve core (30), a driver (40) and a connecting member (50), wherein the valve body (10) is intemally provided with a passage (11) and is provided with a valve stem hole (12) to partially accommodate the valve stem (20); the valve body (10) is provided with an outlet and an inlet, which are in communication with the outside, the valve core (30) is hinged to the valve body (10) at the inlet, and the valve core (30) comprises a valve core body (31) and a locking column (36) protruding towards an outlet side from the valve core body (31); the driver (40) is detachably connected to the valve stem(20) and cooperates with the connecting member (50), such that a rotary motion of the valve stem (20) passes through the connecting member (50) and is transmitted to the valve core (30) via the connecting member and is converted into movement for driving the valve core (30) to rotate around a hinged axis, so as to make the valve core (30) open or close the passage (11); the valve (100) further comprises a locking device (90) extending into the valve body (10) and fixedly connected to the valve stem (20); the joint between the connecting member(50) and the valve core body(31), and the locking column(36) are respectively located on two sides of the center of the valve core (30); and after the valve core (30) closes the passage(11), the locking device (90) is connected to the valve core (30), and the locking device (90) provides a pulling force in the direction from the inlet to the outlet for the locking post(36). The valve can still ensure sealing performance after being opened and closed multiple times.

## Description

This patent application claims the priority of the following Chinese patent applications:
Filed date: September 30th, 2022; Application number: 2022112075357; Invention title: Valve;
The entire text of the above application is incorporated herein by reference.

### Technical Field

The present invention relates to the field of valves, and particularly to a valve.

### Background Art

Existing valves for intermediate bulk containers, such as butterfly valves, have an opening mechanism where a central rotating shaft of the valve core drives both sides of the valve core to rotate and open. Since the valve core is generally located inside the valve body, the flow rate thereof is affected by the valve core and the rotating shaft, resulting in poor sealing performance. Due to friction between the seal ring and the valve body of the butterfly valve, significant force is required to open or close the valve. Typically, a connecting member is used to link the driver to the valve core, enabling the driver to actuate the opening and closing of the valve core. However, the connection between the connecting member and the valve core via pins provides insufficient locking force. Additionally, during valve opening, high flow rates and repeated actuation can cause deformation of the connecting member, leading to reduced locking force on the valve core and degraded sealing performance.

### Summary of the Invention

The objective of the present invention is to provide a valve that can still ensure sealing performance after multiple opening and closing and prolong the valve's service life.

To address the above technical problems, an embodiment of the present invention provides a valve comprising a valve body, a valve stem, a valve core, a driver, and a connecting member; the valve body has a passage and is provided with a valve stem hole to at least partially receive the valve stem, the valve body has an inlet and an outlet communicated with an exterior, and the valve core is pivotally connected to the valve body at the inlet; the valve core comprises a valve core body and a locking post protruding from a side of the valve core body facing the outlet;
the driver is detachably connected to the valve stem and cooperates with the connecting member, such that rotational movement of the valve stem is transmitted to the valve core via the connecting member and converted into rotational movement of the valve core around a hinged axis to enable the valve core to open or close the passage;
the valve further includes a locking device extending into the valve body and fixedly connected to the valve stem; when the valve core closes the passage, the locking device is connected with the locking post, a joint between the connecting member and the valve core body and the locking post are positioned on opposite sides of the center of the valve core respectively;
when the valve core closes the passage, the locking device is connected with the valve core and provides a pulling force in a direction from the inlet to the outlet for the locking post.

Compared to the prior art, the embodiment of the present invention incorporate a locking device, when the valve is closed, not only the connecting member but also the locking device exert forces on the valve core toward the outlet of the valve body, even if the connecting member is deformed after the valve is opened and closed multiple times, the locking device continues to exert a force on the valve core in a direction facing the outlet of the valve body to ensure tight connection between the valve core and the valve body and close the passage, without affecting the locking force on the valve core and the sealing performance of the valve.

In an embodiment, the locking device includes a protruding portion;
wherein, when the valve core closes the passage, the protruding portion provides a pulling force in a direction from the inlet to the outlet for the locking post.

In an embodiment, the protruding portion protrudes in a direction toward the valve stem, the locking post has a connection portion connected to the valve core body and a locking hook portion connected to the side of the connection portion away from the valve core body; and the locking hook portion is curvedly connected to the connection portion and extending toward the side of the locking device having the protruding portion.

In an embodiment, the locking hook portion has a first sidewall facing the valve core body; the protruding portion has a locking surface, and when the valve core closes the passage, the locking surface are away from the valve core body, and the first sidewall abuts against the locking surface, and the locking surface provides the pulling force in a direction from the inlet to the outlet for the first sidewall.

In an embodiment, the protruding portion has an initial side and a terminal side, when the valve core closes the passage, the first sidewall is close to the terminal side;
the initial side has a guiding portion, which protrudes outside the side edge of the locking device.

In an embodiment, the guiding portion has a guiding surface connected to the locking surface, both the locking surface and the guiding surface are curved surfaces protruding outward in a direction away from the axis of the locking device, and the locking surface and the guiding surface are located on the same curved surface;
the distance between the locking surface and the axis of the locking device gradually decreases in a direction from the initial side to the terminal side, during the valve core closing the passage, the first sidewall sequentially abuts against the guiding surface and locking surface.

In an embodiment, the locking surface is a curved surface protruding outward in a direction away from an axis of the locking device, the protruding portion has an initial side and a terminal side, the distance between the locking surface and the axis of the locking device gradually decreases in a direction from the initial side to the terminal side.

In an embodiment, the protruding portion is connected to the locking device, and the protruding portion further has a stopping surface;
the locking device has a sidewall surface relatively isolated from the locking surface, the stopping surface is connected to the locking surface and the sidewall surface;
when the valve core closes the passage, the locking post partially abuts against the stopping surface.

In an embodiment, when the protruding portion is located between the valve core body and the locking post, the protruding portion provides the pulling force in a direction from the inlet to the outlet for the locking post.

In an embodiment, the protruding portion fits with the locking post in interference.

In an embodiment, the locking device comprises a supporting rod and a locking member, both ends of the supporting rod are fixedly connected to the valve stem and the locking member respectively;
the protruding portion is protrudingly provided on the locking member and surrounds on the out periphery in axial direction of the supporting rod;
the locking post has a connecting portion connected to the valve core body and a locking hook portion connected to the side of the connecting portion away from the valve core body; and the locking hook portion is curvedly connected to the connecting portion and extends towards the side of the locking member facing the supporting rod.

In an embodiment, the valve body is provided with a blind hole on a side facing the passage, which is used to receive a portion of the locking member, the protruding portion is located outside the blind hole.

In an embodiment, the valve stem is provided with a first mounting hole and a second mounting hole perpendicular to each other, and the first mounting hole partially communicated with the second mounting hole;
the driver is provided with a first mounting post and a second mounting post operatively inserted into the first mounting hole;
the side of the supporting rod facing the valve stem penetrates through the second mounting hole and partially located in the first mounting hole, and the portion of the supporting rod located in the first mounting hole is clamped between the first stem and the second mounting post.

In an embodiment, the supporting rod rotates with an angle range of 160° to 170° when driven by the valve stem.

In an embodiment, when the opening between the valve core and the valve body is maximum, an out contour area of the supporting rod facing the valve core is minimum.

In an embodiment, the supporting rod is a cuboid structure, the supporting rod has a pair of opposite first surfaces and a pair of opposite second surfaces, the first side surface and the second side surface are connected at interval, an area of the first side surface is greater than that of the second side surface;
when the opening between valve core and the valve body is maximum, the second side surfaces face the valve core.

In an embodiment, a connecting line between the joint between the connecting member and the valve core body and the locking post passes through the center of the valve core;
the locking post has a connecting portion connected to the valve core body and a locking hook portion connected to the side of the connecting portion away from the valve core body; and the locking hook portion is curvedly connected to the connecting portion and extends towards the joint between the connecting member and the valve core body.

In an embodiment, the distance from the center of the valve core body to the center of the joint between the locking post and the valve core body is m, the distance from the center of the valve core body to the boundary of the valve core body facing the inlet is n, and a connecting line between the center of the valve core body and the boundary of the valve core body facing the inlet passes through the center of the joint between the locking post and the valve core body; m/n ranges from 1/3 to 2/3.

### Brief Description of the Drawings

One or more embodiments are exemplarily illustrated by pictures in the corresponding accompanying drawings, these exemplary illustrations do not constitute limitations on the embodiments, elements with the same reference numbers represent similar elements in the drawings, unless stated otherwise, the drawings are not to scale.
FIG.1 is an exploded view of a valve according to an embodiment of the invention;
FIG.2 is a cross-sectional view of the valve according to an embodiment of the invention;
FIG.3 is a structural diagram of a valve body according to an embodiment of the invention;
FIG.4 is a structural diagram of a driver according to an embodiment of the invention;
FIG.5 is a structural diagram of a connecting member according to an embodiment of the invention;
FIG.6 is a structural diagram of the cooperation between the driver and the connecting member according to an embodiment of the invention;
FIG.7 is a structural diagram of the cooperation between the valve core and the connecting member according to an embodiment of the invention;
FIG.8 is a structural diagram of the valve according to an embodiment of the invention;
FIG.9 is an exploded view of the combination of a handle, a valve stem and a locking device according to an embodiment of the invention;
FIG.10 is a structural diagram of the valve core according to an embodiment of the invention;
FIG.11 is a structural diagram of the locking member according to an embodiment of the invention;
FIG.12 is a diagram of a surface of the locking member facing the passage according to an embodiment of the invention;
FIG. 13 is a structural diagram of the valve in the closed state according to an embodiment of the invention;
FIG. 14 is cross-sectional view of the valve according to an embodiment of the invention;
FIG. 15 is a structural diagram of the cooperation between the valve stem and the handle according to an embodiment of the invention;
FIG. 16 is a structural diagram of the driver according to an embodiment of the invention;
FIG. 17 is a structural diagram of the cooperation among the valve core, the connecting member, the valve stem and the handle when the valve is fully opened according to an embodiment of the invention;
FIG. 18 is a structural diagram of the cooperation among the valve core, the connecting member, the valve stem and the handle when the valve is closed according to an embodiment of the invention.

### Reference list:

100: Valve; 10: Valve body; 11: passage; 12: Valve stem hole; 13: Blind hole; 20: Valve stem; 21: First mounting hole; 22: Second mounting hole; 30: Valve core; 31: Valve core body; 32: First hinged shaft; 33: Second hinged shaft; 34: First protrusion; 35: Second protrusion; 36: locking post ; 361: Connection portion; 362: Hook portion; 37: First sidewall; 40: Driver; 41: Fixed end; 411: Upper arm; 412: Lower arm; 413: Middle arm; 42: guiding end; 43: First mounting post; 44: Second mounting post; 50: Connecting member; 51: Opening guide post; 52: Pull-back guide post; 53: Body; 54: First connection pin; 55: Second connection pin; 60: Handle; 70: Valve cover; 80: Anti-theft buckle; 90: Locking device; 91: Protruding portion; 911: Initial side; 912: Terminal side; 92: Locking surface; 93: guiding portion; 931: guiding surface; 94: stopping surface; 95: Sidewall; 96: supporting rod; 961: First side surface; 962: Second side surface; 97: Locking member; a: Angle.

### Detailed Description of Embodiments

Each embodiment of the present application will be described in detail in the following in connection with the accompanying drawings, so that the purposes, features and advantages of the present application can be more clearly understood. The embodiments shown in the accompanying drawings are not intended to be a limitation of the scope of the present application but are merely intended to illustrate the substantive spirit of the technical solution of the present application.

In the following description, for the purpose of explaining the various disclosed embodiments, certain specific details are set forth to provide a thorough understanding of the various disclosed embodiments. However, one skilled in the relevant art will recognize that the embodiments may be practiced without one or more of these specific details. In other instances, well-known devices, structures, and techniques associated with the present application may not be shown or described in detail to avoid unnecessarily obscuring the description of the embodiments.

Unless the context requires otherwise, throughout the specification and claims, the word "comprises" and variations thereof, such as "includes" and "has" should be understood in an open, inclusive sense, that is, to mean "includes, but not limited to".

Reference throughout this specification to "one embodiment" or "an embodiment" means that a particular feature, structure, or characteristic described in connection with the embodiment is included in at least one embodiment. Thus, the appearances of "in one embodiment" or "in an embodiment" in various places throughout this specification are not necessarily all referring to the same embodiment. Additionally, specific features, structures, or characteristics may be combined in any manner in one or more embodiments.

As used in this specification and the appended claims, the singular forms "a," "an" and "" include plural referents unless the context clearly dictates otherwise. It should be noted that the term "or" is generally used in its sense including "or/and" unless the context clearly dictates otherwise.

In the following description, in order to clearly demonstrate the structure and working mode of this application, many directional words will be used to describe it, but "front", "back", "left", "right", "outside", "inside" should be used. ", "outward", "inward", "up", "down" and other words are to be understood as convenient terms and should not be understood as limiting terms.

Embodiments of the present invention are described below with reference to the accompanying drawings.

An embodiment of the present invention provides a valve 100, comprising a valve body 10, a valve stem 20, a valve core 30, a driver 40, and a connecting member 50. The valve body 10 is formed with a passage 11 therein and is provided with a stem hole 12, to at least partially receive the stem 20, and the valve core 30 is hinged to the valve body 10. The driver 40 is detachably connected with the valve stem 20 and cooperates with the connecting member 50 so that the rotational movement of the valve stem 20 is transmitted to the valve core 30 via the connecting member 50 and converted to a movement that drives the valve stem 30 to rotate around the hinged axis, so as to enable the valve stem 30 to open or close the passage 11.

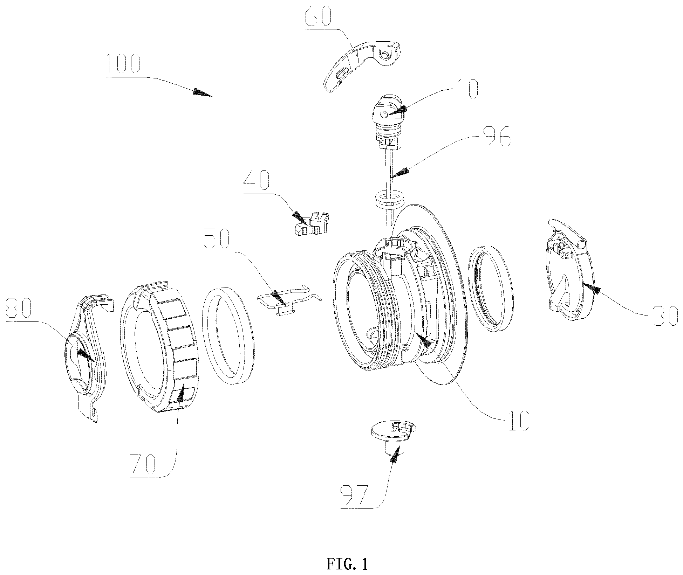

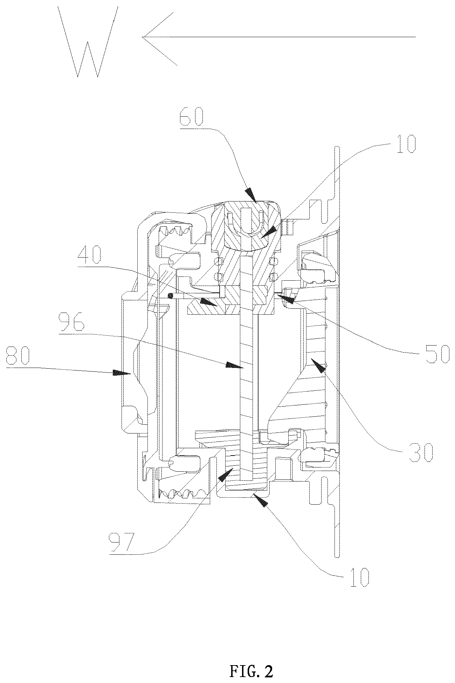

Specifically, as shown in FIGS.1 and 2 , the valve 100 comprises a valve body 10 , a handle 60, a connecting member 50 , a valve core 30 , a driver 40 and a valve stem 20. The valve core 30 is connected to the valve body 10 through a hinge. The hinge is composed of a hinged shaft provided on the valve core 30 and a hinged hole provided on the valve body 10. The handle 60 is fixed to the valve stem 20, when the handle 60 is rotated, the valve stem 20 will rotate along the axis of the valve stem hole 12 as the handle 60 rotates. The valve stem 20 is connected to the valve core 30 through the connecting member 50 and the driver 40. The connecting member 50 and the driver 40 play a transmission role in transmitting the movement of the valve stem 20 to the valve core 30, so that when the handle 60 is rotated, the handle 60 drives the valve stem 20 to rotate, and then the valve stem 20 drives the driver 40 and the connecting member 50 to move. The movement of the connecting member 50 drives the valve core 30 to move, thereby realizing the opening and closing of the valve. A valve cover 70 may also be provided on the side of the valve body 10 away from the valve core 30, and an anti-theft buckle 80 may also be provided over the valve cover 70 .

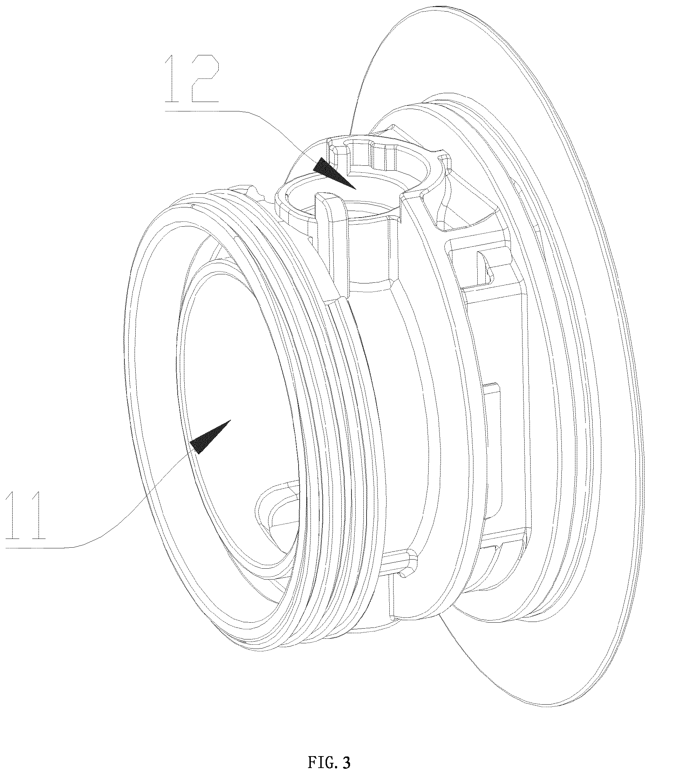

FIG.3 shows a perspective view of the valve body 10 of the valve 100 according to an embodiment of the present invention, the valve body 10 is a shell and is provided with a passage 11 therein, and the passage 11 allows fluid to pass through. The left and right sides of the figure are respectively the outlet and the inlet that form the communication between the container where the valve 100 is located and the exterior, as shown in FIG.2, the direction of arrow W is the direction from the inlet to the outlet, and a valve core 30 is provided at the inlet, the outlet is connected to the valve cover 70. The upper end of the valve body 10 forms a valve stem hole 12 along a vertical axis perpendicular to the horizontal axis.

The valve stem 20 is partially received in the valve stem hole 12, there are two protrusions on the upper part of the valve stem 20, and there are pin holes arranged oppositely on the two protrusions, the handle 60 is engaged between the two protrusions, and two pin shafts are provided on both sides of the handle 60, and the two pin shafts are correspondingly inserted into the two pin holes.

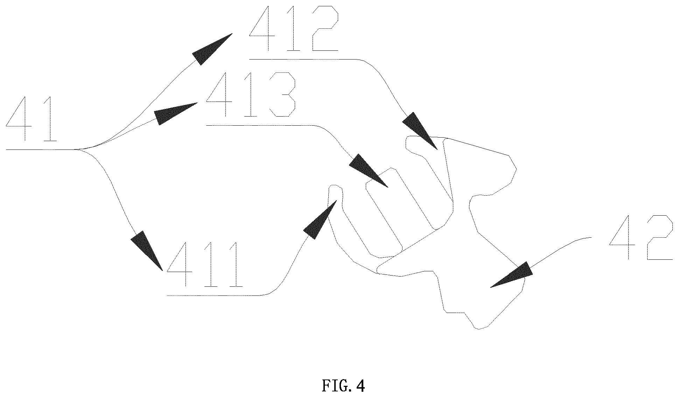

FIG.4 shows a schematic structural diagram of the driver 40 of the valve 100. The driver 40 comprises a fixed end 41 connected to the valve stem 20 and a guiding end 42 that cooperates with the connecting member 50, the outer surfaces of both sides of the guiding end 42 are respectively provided with a push-out contour and a pull-back contour, the push-out contour and the pull-back contour cooperate with an opening guide post 51 and a pull-back guide post 52 of the connecting member 50 respectively to achieve the transmission of movement, which will be further described in detail below.

In FIG.4, the push-out contour on the left side of the guiding end 42 of the driver 40 is successively provided with a push-out portion and a limiting portion that are curvedly connected in the direction away from the free end, so that during the opening of the valve 100, the push-out portion cooperates with the opening guide post 51 to push the connecting member 50 to move, thereby driving the valve core 30 to open the passage 11, when the valve 100 is opened, the opening guide post 51 of the connecting member 50 disengages from the pushing portion and enters into the limiting portion. Preferably, the limiting portion is concave groove. During the closing of the valve 100, the pull-back contour cooperates with the opening guide post 51 and the pull-back guide post 52 of the connecting member 50, the pull-back contour may be a curved surface or a flat surface.

The fixed end 41 of the driver 40 is substantially E-shaped, and an upper arm 411 and a lower arm 412 of the E shape have a certain degree of elasticity, so that when a middle arm 413 of the driver 40 is inserted into a first mounting hole 21, the driver 40 will not fall off from the first mounting hole 21 unless it is manually disassembled. When the upper arm 411 and the lower arm 412 of the driver 40 are assembled to the valve stem 20, the driver 40 always has the force to hold the valve stem 20 so that the driver 40 will not fall off, when the valve stem 20 rotates, the driver 40 will rotate synchronously with the valve stem 20, and when disassembling, as long as the manual force is greater than the elastic force of the upper arm 411 and the lower arm 412.

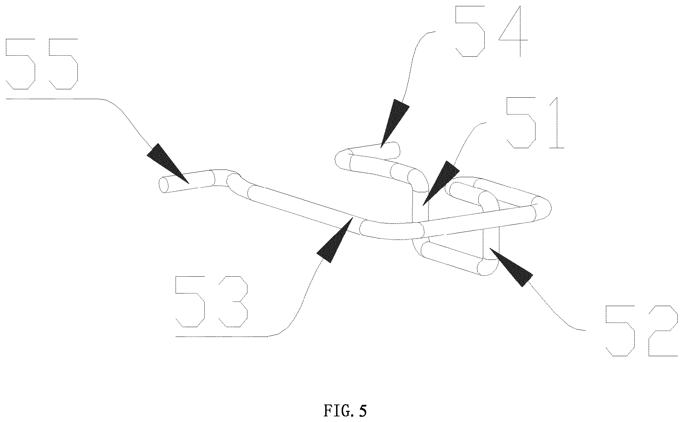

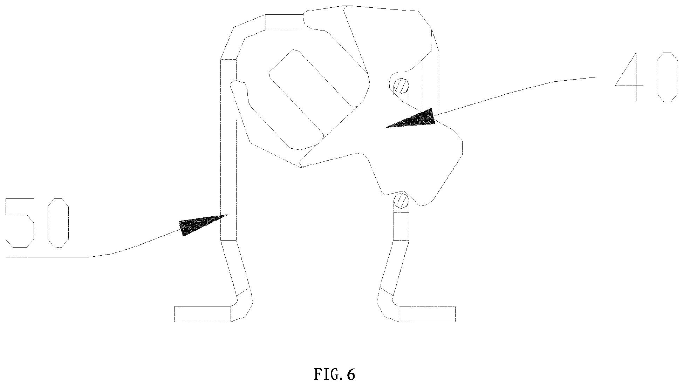

FIG.5 shows a schematic structural diagram of the connecting member 50 of the valve 100 according to an embodiment of the present invention. As shown in FIG. 5, the connecting member 50 has a substantially U-shaped body 53, and a first connecting pin 54 and a second connecting pin 55 are provided at the ends of two arms of the body 53, an opening guide post 51 and a pull-back guide post 52 are also provided on one of the two arms of the connecting member 50. The opening guide post 51 and the pull-back guide post 52 are spaced apart from each other and extends downward from the U-shaped plane, so as to form a substantially " 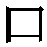 " shaped structure together with the U-shaped body 53. Preferably, the connecting member 50 is formed by integrally bending the elastic material. The opening guide post 51 and the pull-back guide post 52 are located at appropriate positions of the U-shaped body 53, so that the opening guide post 51 and the pull-back guide post 52 cooperate with the push-out contour and the pull-back contour of the driver 40 respectively, thereby realizing the opening and closing of the valve 100. Specifically, as shown in FIG.6, when assembled, the guiding end 42 of the driver 40 extends into the " 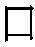 " shaped structure, so that during the opening of the valve 100, the valve stem 20 drives the driver 40 to rotate, and then the opening guide post 51 cooperates with the push-out contour to drive the connecting member 50 to move, and the connecting member 50 drives the valve core 30 to rotate, thereby realizing the opening of the valve 100. During the closing of the valve 100, the valve stem 20 drives the connecting member 50 to rotate, the pull-back guide post 52 cooperates with the pull-back contour to drive the connecting member 50 to move, and the connecting member 50 drives the valve core 30 to rotate, then the valve core 30 closes the passage 11, that is, realizing the closing of the valve 100.

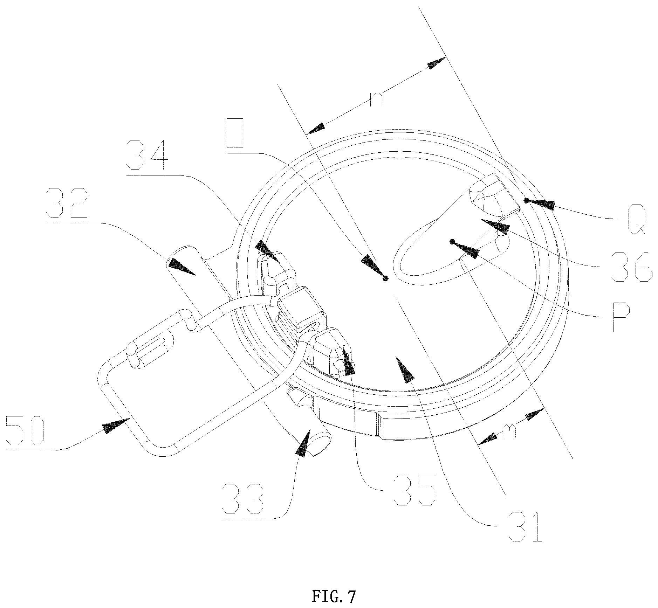

As shown in FIG. 7, the valve core 30 has a disc-shaped valve core body 31, and the valve core body 31 is integrally provided with a first hinged shaft 32 and a second hinged shaft 33 on the outer periphery, the side of one end of the valve core body 31 close to the first hinged shaft 32 and the second hinged shaft 33 protrudes to form a first protrusion 34 and a second protrusion 35, and the first protrusion 34 and the second protrusion 35 are respectively provided with hinged holes (not shown in the figure) for accommodating the first connecting pin 54 and the second connecting pin 55 of the connecting member 50. When assembled, the valve stem 20 is partially received in the valve stem hole 12 of the valve body 10, and the driver 40 is inserted into the first mounting hole 21 on the valve stem 20. The guiding end 42 of the driver 40 extends into the " 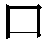 " shaped structure of the connecting member 50 to cooperate with the opening guide post 51 and the pull-back guide post 52. The hinged shaft on the valve core 30 is mounted in the hinged hole of the valve body 10. Since the connecting member 50 has a certain elasticity, after assembled, the connecting member 50 will not fall off from the valve core 30 unless it is manually disassembled.

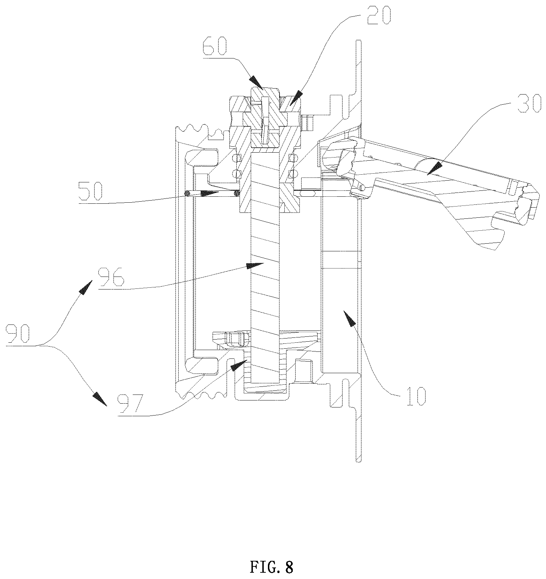

As shown in FIG.8 , the valve stem 20 is partially received in the valve stem hole 12 and is rotatably held on the valve body 10, the first connecting pin 54 and the second connecting pin 55 of the valve core 30 are inserted into the hinged holes of the valve body 10 respectively, so that the valve core 30 can rotate around the central axis of the hinged hole, and the valve stem 20 is connected to the valve core 30 through the driver 40 and the connecting member 50, so that when the valve stem 20 is rotated, the valve stem 20 drives the connecting member 50 to move, and then drives the valve core 30 to move, thereby driving the valve core 30 to open or close the passage 11, that is, to open and close the valve 100 .

It should be noted that in the above embodiments, each member may have various variants, for example, the handle 60 and the valve body 10 may be integrated, the hinged connection between the valve core 30 and the valve body 10 may be realized by providing the hinged hole on the valve core 30 and providing the connecting pin on the valve body 10, etc.. In addition, the driver 40 and the connecting member 50 may also have other configurations, as long as the connecting member 50 is provided with the connecting pin for rotatably connecting with the hinged hole of the valve core 30, and the driver 40 and the connecting member 50 are respectively provided with a guide structure, such as a guide contour and a guide post, and can move synchronously with the valve stem 20. The guide contour may be provided on the driver 40, in this case, the guide post is provided on the connecting member 50, or the guide contour may also be provided on the connecting member 50 , in this case, the guide post is correspondingly provided on the driver 40. The driver 40 may be integral with the valve stem 20 .

In this invention, the valve 100 is at least required to include a valve body 10, a valve stem 20, a valve core 30, a driver 40 and a connecting member 50. The valve body 10 has an axial passage 11 therein for fluid to pass through, as shown in FIGS. 1 and 3, the left and right sides of the valve body 10 respectively form an outlet and an inlet through which the container is communicated with the outside, the inlet is connected to the valve core 30, the upper part of the valve body 10 is provided with a valve stem hole 12 along a vertical axis perpendicular to the horizontal axis, the valve stem 20 is partially received in the valve stem hole 12, so that the valve stem 20 can be rotated, the valve body 10 is hinged to the valve core 30, a hinged shaft is provided on the valve body 10, the upper side of the valve core 30 is provided a hinged hole opposite to the hinged shaft on the valve body 10, the driver 40 and the valve stem 20 are detachably connected through their own structures and cooperate with the connecting member 50, so that the rotational movement of the valve stem 20 can be transmitted to the valve core 30 through the driver 40 via the connecting member 50 and is converted into a movement that drives the valve core 30 to rotate around the hinge axis, by means of this structure, the valve 100 can be opened and closed.

Specifically, the valve stem 20 is connected to the valve core 30 through the connecting member 50 and the driver 40, the connecting member 50 and the driver 40 transmit the movement of the valve stem 20 to the valve core 30, when the valve stem 20 is rotated, the valve stem 20 drives the driver 40 and the connecting member 50 to move, and then the connecting member 50 drives the valve core 30 to move, thereby realizing the opening and closing of the valve 100. The driver 40 includes a fixed end 41 connected to the valve stem 20 and a guiding end 42 that cooperates with the connecting member 50, the outer surfaces of the guiding end 42 on both sides are provided with push-out contours and pull-back contours. The push-out contour and the pull-back contour cooperate with the connecting member 50 to realize the transmission of movement. The body 53 of the connecting member 50 is substantially U-shaped, and first connecting pins 54 and second connecting pins 55 are provided at the ends of two arms of the connecting member 50, one of the two arms of the connecting member 50 is provided with an opening guide post 51 and a pull-back guide post 52, which are spaced apart from each other and perpendicular to the plane where the body 53 is located, so as to form a " 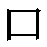 " shape together with the body 53 of the connecting member 50. The opening guide post 51 and the pull-back guide post 52 cooperating with the push-out contour and the pull-back contour of the driver 40 respectively to realize the opening and closing of the valve 100. When the valve 100 is assembled, the guiding end 42 of the driver 40 extends into the " 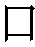 " shape, so that during opening, the valve stem 20 drives the driver 40 to rotate, and the opening guide post 51 cooperates with the push-out contour to drive the connecting member 50 to move, which in turn transmits the movement, so that the connecting member 50 drives the valve core 30 to move, thereby opening the valve 100. Correspondingly, during closing, the valve stem 20 drives the driver 40 to rotate, and the pull-back guide post 52 cooperates with the pull-back contour to drive the connecting member 50 to move, which in turn transmits the movement, so that the connecting member 50 drives the valve core 30 to move, thereby closing the valve 100.

In the prior art, the connecting member 50 is used to connect the driver 40 to the valve core 30, so that the driver 40 drives the valve core 30 to open and close, the pin-shaft connection between the connecting member 50 and the valve core 30 does not have enough locking force on the valve core 30, and when the valve core 30 is opened, the flow rate through the valve body 10 is larger, after opening and closing the valve core 30 multiple times, the connecting member 50 is easily deformed, resulting in the locking force on the valve core 30 and the sealing performance of the valve becoming poor.

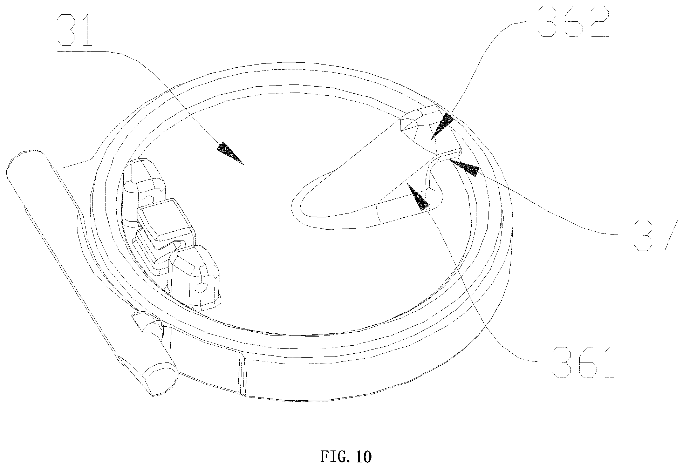

Therefore, a valve 100 according to an embodiment of the present invention also comprises a locking device 90 that extends into the valve body 10 and is fixedly connected to the valve stem 20, with reference to FIG.10, the valve core 30 comprises a valve core body 31 and a locking post 36 that protrudes from one side of a valve core body 31 facing the valve body 10, when the valve core 30 closes the passage 11, the locking device 90 is connected to the locking post 36, the joint between the connecting member 50 and the valve core body 31 and the joint between the locking device 90 and the locking post 36 are respectively located on both sides of the center of the valve core 30, the locking device 90 provides a pulling force in a direction from the inlet to the outlet for the locking post 36. The above-mentioned valve core 30 closes the passage 11, that is, the valve 100 is closed.

With the addition of the locking device 90, when the valve 100 is closed, not only the connecting member 50 exerts a force on the valve core 30 in a direction facing the outlet of the valve body 10, but also the locking device 90 exerts a force on the valve core 30 in a direction facing the outlet of the valve body 10, even if the connecting member 50 is deformed after the valve 100 is opened and closed multiple times, the locking device 90 still exerts a force on the valve core 30 in a direction facing the outlet of the valve body 10, so that the valve core 30 is tightly connected to the valve body 10 and closes the passage 11, without affecting the locking force on the valve core 30 and the sealing performance of the valve.

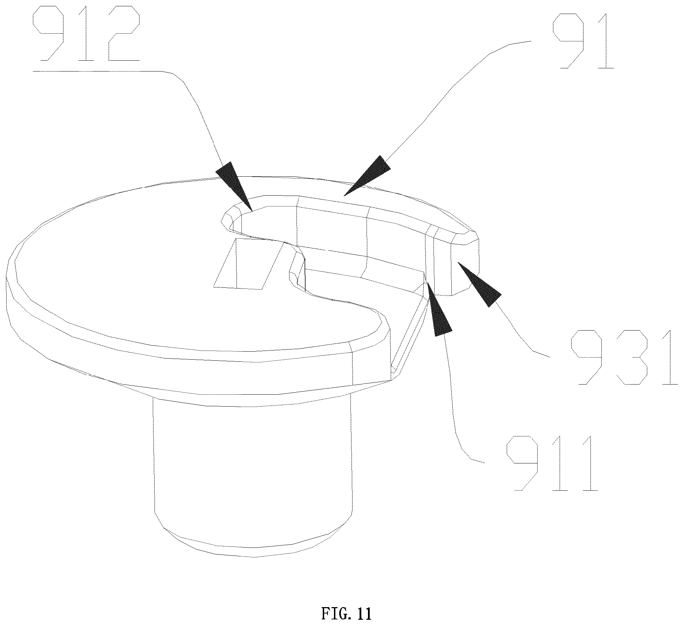

As shown in FIG. 11 , a protruding portion 91 protrudes from the locking device 90, wherein, when the valve core 30 closes the passage 11, the protruding portion 91 buckles and pulls the locking post 36. That is, when the valve 100 is closed, the protruding portion 91 on the locking device 90 buckles and pulls the protruding locking posts 36 on the valve core body 31, so that the valve core body 31 is buckled and pulled to closely contact with the valve body 10, and seal the passage 11 of the valve body 10. Those skilled in the art may configure according to actual needs.

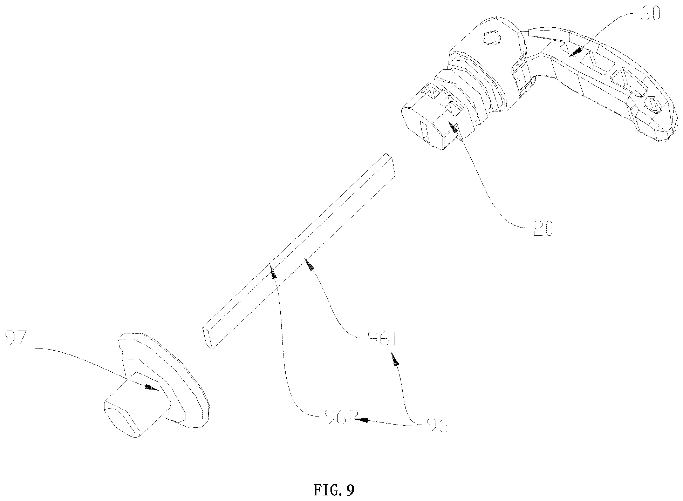

Further, as shown in FIG. 9, the protruding portion 91 protrudes toward the valve stem 20, and the locking post 36 has a connecting portion 361 connected to the valve core body 31, and a hook portion 362 connected to a side of the connecting portion 361 away from the valve core body 31, the hook portion 362 is curvedly connected to the connecting portion 361 and extends toward the side of the locking device 90 provided with the protruding portion 91, that is, the hook portion 362 extends downward. It should be understood that although the protruding portion 91 protrudes toward the valve stem 20 in this embodiment, in other embodiments, the protruding portion 91 may also be provided at the bottom of the locking device 90, in this case the locking portion of the locking post 36 is bent upward, without departing from the scope of the present invention, and those skilled in the art can configure according to actual needs.

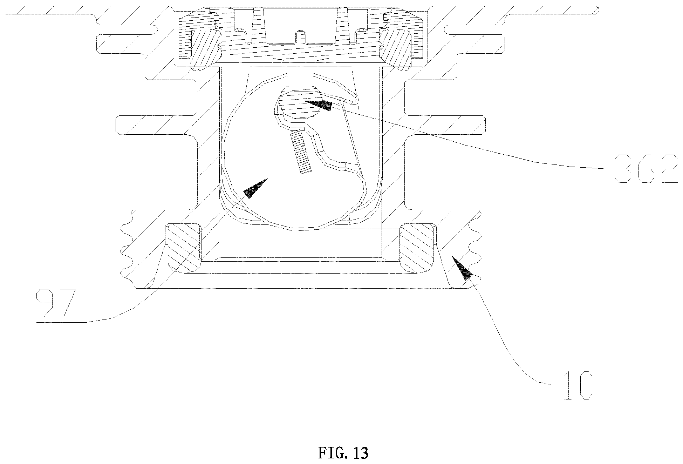

Preferably, the locking hook portion 362 has a first side wall 37 facing the valve core body 31, and the protruding portion 91 has a locking surface 92. And when the valve core 30 closes the passage 11, that is, in the state shown in FIG.13, the locking surface 92 is away from the valve core body 31, the first side wall 37 abuts against the locking surface 92, and the locking surface 92 provides a pulling force in a direction from the inlet to the outlet for the first side wall 37. After the valve 100 is closed, the first side wall 37 abuts against the locking surface 92, that is, the locking hook portion 362 and the protruding portion 91 are tightly buckled and pulled, so that the valve core 30 can closely contact the valve body 10, and the valve core 30 can completely close the passage 11 of the valve body 10, thus ensuring the sealing performance of the valve 100, and those skilled in the art can configure according to actual needs.

Further, the protruding portion 91 has an initial side 911 and an terminal side 912. After the valve core 30 closes the passage 11, that is, after the valve 100 is closed, the first side wall 37 is close to the terminal side 912. The initial side 911 is connected with a guiding portion 93, and the guiding portion 93 protrudes outside the side edge of the locking device 90. During the closing of the valve 100, the locking hook portion 362 moves in the direction from the guiding portion 93, the initial side 911 of the protruding portion 91 to the terminal side 912 of the protruding portion 91, when the locking hook portion 362 moves to drive the valve core 30 to close the passage 11, the locking hook portion 362 moves to the terminal side 912 of the protruding portion 91, that is, the locking hook portion 362 approaches the terminal side 912 toward the first side wall 37 of the valve core body 31. The guiding portion 93 is provided on the initial side 911 of the protruding portion 91, and the guiding portion 93 protrudes outside the side edge of the locking device 90, so that during the closing of the valve 100, the guiding portion 93 can hook the locking hook portion 362 in advance into a position close to the locking device 90, it plays a guiding role on the movement track of the locking hook portion 362, and those skilled in the art can configure according to actual needs.

In addition, as shown in FIG.11, the locking surface 92 is a curved surface protruding outward in a direction away from the axis of the locking device 90, wherein the protruding portion 91 has an initial side 911 and an terminal side 912, and the distance between the locking surface 92 and the axis of the locking device 90 gradually decreases in a direction from the initial side 911 to the terminal side 912. During the closing of the valve 100, the movement track of the locking hook portion 362 is a process of gradually approaching the axis of the locking device 90 until the movement stops. Therefore, the distance between the locking surface 92 and the axis of the locking device 90 gradually decreases in the direction from the initial side 911 to the terminal side 912, so that the locking surface 92 can always contact with the first side wall 37 during the movement of the locking hook portion 362, so as not to deviate from the movement track of the closing valve 100, and those skilled in the art can configure according to actual needs.

Preferably, as shown in FIG.11, the guiding portion 93 has a guiding surface 931 connected to the locking surface 92. The guiding surface 931 is also a curved surface protruding outward in a direction away from the axis of the locking device 90, and the locking surface 92 and the guiding surface 931 are on the same curved surface. The distance between the guiding surface 931 and the axis of the locking device 90 gradually decreases in a direction from the initial side 911 to the terminal side 912. During the valve core 30 closing the passage 11, the first side wall 37 abuts against the guiding surface 931 and the locking surface 92 in sequence. During the valve 100 closing, the movement track of the locking hook portion 362 is a process of gradually approaching the axis of the locking device 90 until the movement stops. Therefore, the distance between the locking surface 92 and the guiding surface 931 and the axis of the locking device 90 gradually decreases in a direction from the initial side 911 to the terminal side 912, so that the locking surface 92 and the guiding surface 931 can always contact with the first side wall 37 during the movement of the locking hook portion 362, so as not to deviate from the movement track of the valve 100, that is, the curvature of the curved surface where the locking surface 92 and the guiding surface 931 are located is the same as the movement track of the locking hook portion 362, and the locking hook portion 362 moves closely against the locking surface 92 and the guiding surface 931, those skilled in the art can configure according to actual needs. It can be understood that in some embodiments, the curvature of the curved surface where the locking surface 92 and the guiding surface 931 are located may be partially different from the movement track of the locking portion 362, after the valve 100 is closed, there is a abutting force between the locking surface 92 and the locking portion 362, or during the closing of the valve, after the valve core moves in part of the stroke, there is a abutting force between the locking surface 92 and the locking portion 362.

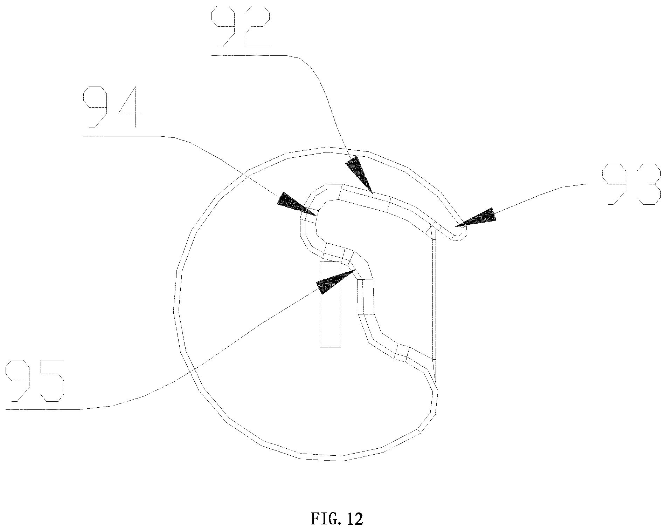

In addition, as shown in FIG.12, the protruding portion 91 is connected to the locking device 90, and the protruding portion 91 also has a stopping surface 94, the locking device 90 has a side wall surface 95 that is relatively isolated from the locking surface 92, the stopping surface 94 is connected to the locking surface 92 and the side wall surface 95. Wherein, as shown in FIG. 13 , after the valve core 30 closes the passage 11, the locking post 36 at least partially abuts against the stopping surface 94. During the closing of the valve 100, the hook portion 362 moves in a direction from the guiding surface 931 and the locking surface 92 to the stopping surface 94, when the hook portion 362 moves to abut against the stopping surface 94, the valve core 30 stops rotating, at the same time the valve 100 is closed. The stopping surface 94 is provided to limit the movement of the locking hook portion 362 after the valve 100 is closed, and those skilled in the art can configure according to actual needs.

Additionally, when the protruding portion 91 is located between the valve core body 31 and the locking post 36, the protruding portion 91 provides a pulling force in a direction from the inlet to the outlet for the locking post 36. That is, during the closing of the valve 100, the protruding portion 91 always buckles and pulls the locking post 36. Specifically, the protruding portion 91 and the locking device 90 form a groove-like structure, and the locking post 36 moves in the groove, and the protruding portion 91 may be provided on the top surface of the locking device 90, in this case the locking post 36 buckles and pulls the protruding portion 91 downwardly, or the protruding portion 91 may be provided on the bottom surface of the locking device 90, in this case the locking post 36 buckles and pulls the protruding portion 91 upwardly. That is, when the valve 100 is closed, the protruding portion 91 on the locking device 90 buckles and pulls the protruding locking post 36 on the valve core body 31, so that the valve core body 31 is buckled and pulled to tightly contact with the valve body 10, closing the passage 11 of valve body 10. In other embodiments, the protrusion 91 does not always buckle and pull the locking post 36 during the closing of the valve 100. Those skilled in the art can configure according to actual needs.

In addition, the protruding portion 91 fits with the locking post 36 in interference. Therefore, the protruding portion 91 can tightly buckle and pull the locking post 36, that is, the valve core 30 and the valve body 10 are closely engaged to ensure the sealing performance of the valve 100.

Specifically, as shown in FIG. 9, the locking device 90 includes a supporting rod 96 and a locking member 97. Both ends of the supporting rod 96 are fixedly connected to the valve stem 20 and the locking member 97 respectively. As shown in FIGS.11 and 12, the protruding portion 91 is protrudingly provided on the locking member 97, and the protruding portion 91 surrounds on the outer periphery in the axial direction of the supporting rod 96. As shown in FIG.10, the locking post 36 has a connecting portion 361 connected to the valve core body 31, and a locking hook portion 362 connected to the side of the connecting portion 361 away from the valve core body 31, and the locking hook portion 362 is curvedly connected to the connecting portion 361, and extends toward one side of the locking member 97 facing the supporting rod 96. This arrangement allows the protruding portion 91 to be provided on the top of the locking member 97 and the locking hook portion 362 to bend downwardly, therefore, after the valve 100 is closed, the top end of the valve core 30 has a force toward the valve body 10 through the connecting member 50, and the lower part of the valve core 30 also has a force toward the valve body 10 to pull and hold, so as to ensure the sealing performance of the valve 100. The structure of the locking device 90 is not limited to the structure shown in the figures, the locking device 90 may also be a rod body with a hook body disposed around the rod body, the hook body cooperates with the locking hook portion 362 to hook the locking hook portion 362. It should be understood that the locking device 90 may also be an integral piece without being separated into the supporting rod 96 and the locking member 97, or the locking device 90 may be a downwardly protruding and extending portion of the valve stem 20, without departing from the scope of the present invention .

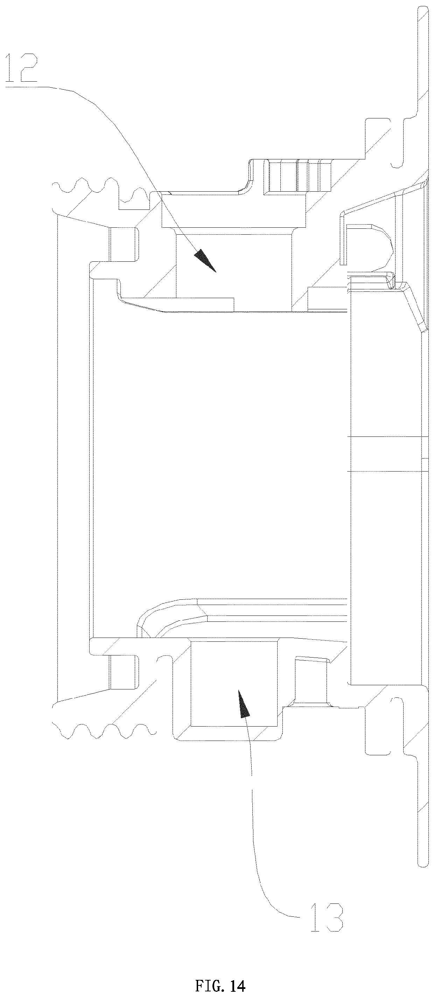

Further, as shown in FIGS.2 and 14, a blind hole 13 is provided on the side of the valve body 10 facing the passage 11, and the blind hole 13 is used to receive a part of the locking member 97, and the protruding portion 91 is provided outside the blind hole 13. Providing the blind hole 13 on the side of the valve body 10 facing the passage 11 not only can not affect the sealing performance of the valve body 10, but also can create an area to receive a part of the locking member 97, since the locking hook portion 362 is operatively located in the passage 11, and arranging the protruding portion 91 outside the blind hole 13 can ensure that the protruding portion 91 can buckle and pull the locking hook portion 362, this structure is reasonable, and those skilled in the art can configure according to actual needs. It should be understood that the blind hole 13 may also be in the form of a through hole, but the part of the through hole that receives the locking member 97 can be provided with a sealing ring. This embodiment does not depart from the scope of the present invention. Those skilled in the art can configure according to actual needs.

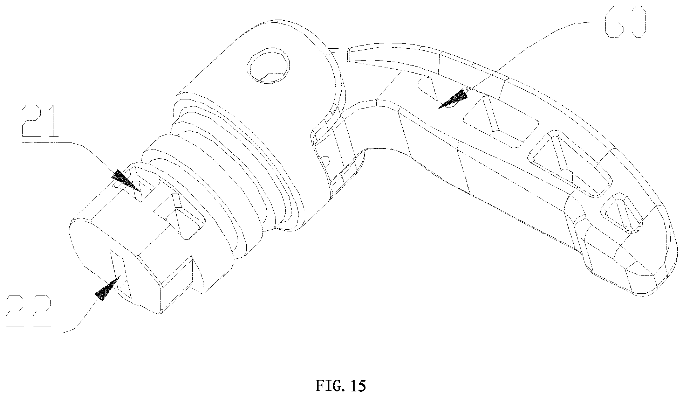

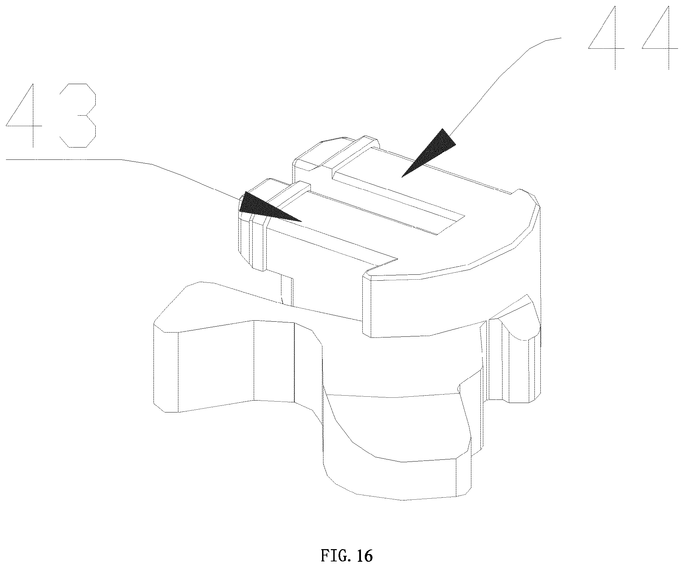

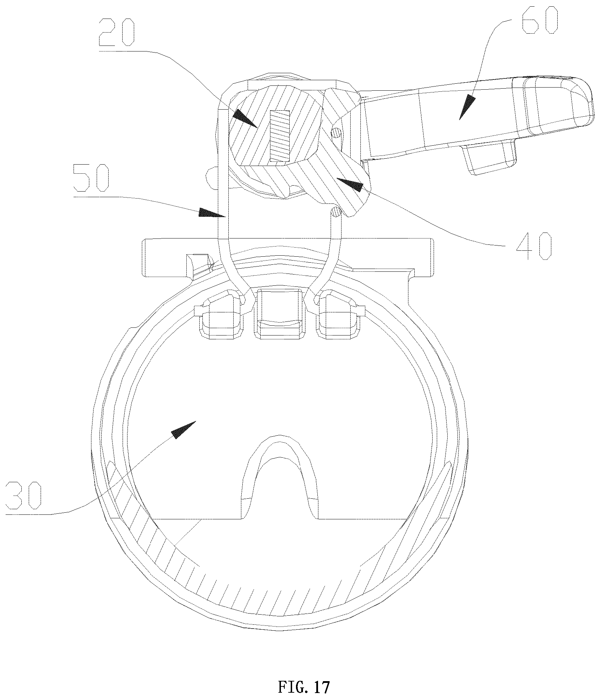

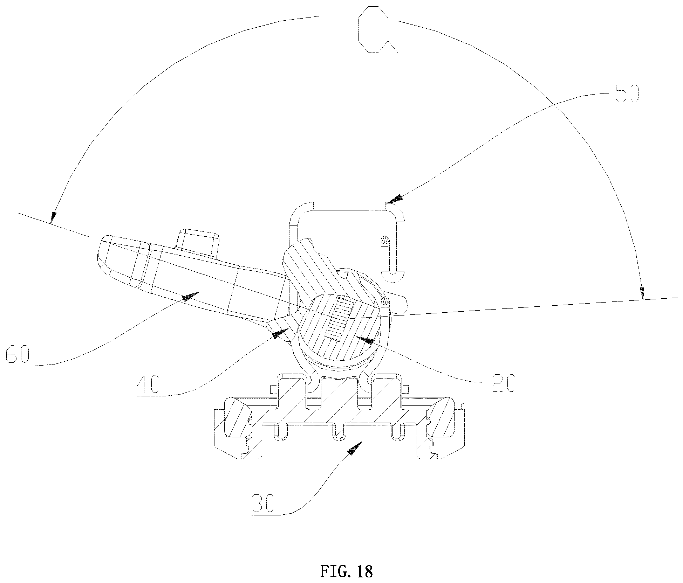

In addition, as shown in FIG.15, the valve stem 20 is provided with a first mounting hole 21 and a second mounting hole 22, and the extending directions of the first mounting hole 21 and the second mounting hole 22 are perpendicular to each other, the first mounting hole 21 at least partially communicates with the second mounting hole 22. As shown in FIG.16, the driver 40 is provided with a first mounting post 43 and a second mounting post 44, which are operatively inserted into the first mounting hole 21, and one side of the supporting rod 96 facing the valve stem 20 penetrates through the second mounting hole 22 and is partially located in the first mounting hole 21, and the portion of the supporting rod 96 located in the first mounting hole 21 is clamped between the first mounting post 43 and the second mounting post 44 . This arrangement not only can save space, but also can ensure that the supporting rod 96 is stably clamped between the first mounting post 43 and the second mounting post 44, ensuring the relatively stable movement of the driver 40 and the supporting rod 96, When the driver 40 starts moves, the supporting rod 96 will also move, and when the supporting rod 96 moves, the driver 40 will also move accordingly. Those skilled in the art can set configure according to actual needs.
Additionally, as shown in FIGS.17 and 18, an angle a through which the supporting rod 96 is rotated by the valve stem 20 ranges from 160° to 170°. That is, from the time when the flow rate of the valve 100 is maximum to the time when the valve 100 is closed, the angle a through which the supporting rod 96 is rotated by the valve stem 20 ranges from 160° to 170°. That is, when the valve 100 in the closed state is opened to be in the maximum flow state, that is, the rotation angle a of the valve core 30 is the largest, the angle a through which the supporting rod 96 is rotated by the valve stem 20 ranges from 160° to 170°.

In addition, when the opening between the valve core 30 and the valve body 10 is the largest, the outer contour area of the supporting rod 96 facing the valve core 30 is the smallest. That is, when the flow rate of the valve 100 is maximum, that is, when the valve core 30 rotates to the maximum angle a, the outer contour area of the supporting rod 96 facing the valve core 30 is the smallest. This arrangement minimizes the obstruction of the supporting rod 96 to the passage of fluid, which not only ensures the sealing performance of the valve 100, but also ensures the largest flow rate possible.

Preferably, as shown in FIG. 9, the supporting rod 96 is a cuboid structure, the supporting rod 96 has a pair of opposite first side surfaces 961 and a pair of opposite second side surfaces 962, which are spacedly connected, and the area of the first side surface 961 is larger than that of the second side surface 962 . Wherein, when the opening between the valve core 30 and the valve body 10 is largest, the second side surface 962 faces the valve core 30. That is, when the flow rate of the valve 100 is maximum, that is, when the valve core 30 rotates to the largest angle a, the second side surface 962 faces the valve core 30. This arrangement has a simple structure and minimizes the obstruction of the supporting rod 96 to the passage of fluid, which can not only ensure the sealing performance of the valve 100, but also ensure the largest possible flow rate.

In addition, a connecting line between the joint between the connecting member 50 and the valve core body 31 and the locking portion passes through the center of the valve core 30. The locking post 36 has a connecting portion 361 connected to the valve core body 31, and a locking hook portion 362 connected to the side of the connecting portion 361 away from the valve core body 31, and the locking hook portion 362 is curvedly connected to the connecting portion 361, and extends toward the joint between the connecting member 50 and the valve core body 31. That is, the joint between the connecting member 50 and the valve core body 31 is located at the top of the valve core body 31, and the locking portion is located at the bottom of the valve core body 31, thus when the valve 100 is closed, the forces on both end sides of the valve core body 31 enable the valve core body 31 to be sealed with the valve body 10, ensuring the sealing performance of the valve 100 to the greatest extent. It can be understood that the connecting line between the joint between the connecting member 50 and the valve core body 31 and the locking portion passing through the center of the valve core 30 is optimal, the connecting line between the joint between the connecting member 50 and the valve core body 31 and the locking portion may not pass through the center of the valve core 30 .

Further, as shown in FIG.7, the distance from the center O of the valve core body 31 to the center P of the joint between the locking post 36 and the valve core body 31 is m, and the distance from the center O of the valve core body 31 to the boundary Q on the side of the valve core body 31 facing the inlet is n, and the connecting line between the center O of the valve core body 31 and the boundary on the side of the valve core body 31 facing the inlet passes through the center P of the joint between the locking post 36 and the valve core body 31, m/n ranges from 1/3 to 2/3. That is to say, the center P of the joint between the locking post 36 and the valve core body 31 may be at the middle, one-third or two-thirds between the boundary Q of the valve core body 31 and the center O of the valve core body 31; or at one-fourth or one-fifth, the connection point P between the locking post 36 and the valve core body 31 is closer to the boundary Q of the valve core body 31 and away from the center O of the valve core body 31. The center of the joint between the locking post 36 and the valve core body 31 can also be slightly eccentric, which is within the protection scope of this application.

The preferred embodiments of the present invention have been described in detail above, but it should be understood that the embodiments can be modified if necessary.

Aspects, features, and concepts from various patents, applications, and publications are employed below to provide additional embodiments.
These and other changes can be made to the embodiments in view of the above detailed description. In general, in the claims, the terms used should not be construed as limiting to the specific embodiments disclosed in the specification and claims, but should be understood to include all possible embodiments together with all equivalent scopes to which such claims are entitled.

Those ordinary skilled in the art can understand that the above-mentioned embodiments are specific examples for implementing the present invention, and in practical applications, various changes can be made in form and details without departing from the spirit and scope of the present invention.

## Claims

1. A valve, wherein
the valve comprises a valve body, a valve stem, a valve core, a driver, and a connecting member; the valve body is provided with a passage therein and is provided with a valve stem hole to at least partially receive the valve stem, the valve body has an inlet and an outlet communicated with an exterior, and the valve core is pivotally connected to the valve body at the inlet; the valve core comprises a valve core body and a locking post protruding from a side of the valve core body facing the outlet;
the driver is detachably connected to the valve stem and cooperates with the connecting member, such that rotational movement of the valve stem is transmitted to the valve core via the connecting member and converted into rotational movement of the valve core around a hinged axis to enable the valve core to open or close the passage; the valve further includes a locking device extending into the valve body and fixedly connected to the valve stem; when the valve core closes the passage, the locking device is connected with the locking post, a joint between the connecting member and the valve core body and the locking post are positioned on opposite sides of the center of the valve core respectively;
when the valve core closes the passage, the locking device is connected with the valve core and provides a pulling force in a direction from the inlet to the outlet for the locking post.

2. The valve according to claim 1, wherein the locking device includes a protruding portion;
wherein, when the valve core closes the passage, the protruding portion provides the pulling force in a direction from the inlet to the outlet for the locking post.

3. The valve according to claim 2, wherein the protruding portion protrudes in a direction toward the valve stem, the locking post has a connection portion connected to the valve core body and a locking hook portion connected to the side of the connection portion away from the valve core body; and the locking hook portion is curvedly connected to the connection portion and extending toward the side of the locking device having the protruding portion.

4. The valve according to claim 3, wherein the locking hook portion has a first sidewall facing the valve core body; the protruding portion has a locking surface, and when the valve core closes the passage, the locking surface is away from the valve core body, and the first sidewall abuts against the locking surface, and the locking surface provides the pulling force in a direction from the inlet to the outlet for the first sidewall.

5. The valve according to claim 4, wherein the protruding portion has an initial side and a terminal side, when the valve core closes the passage, the first sidewall is close to the terminal side;
the initial side has a guiding portion, which protrudes outside the side edge of the locking device.

6. The valve according to claim 5, wherein the guiding portion has a guiding surface connected to the locking surface, both the locking surface and the guiding surface are curved surfaces protruding outward in a direction away from an axis of the locking device, and the locking surface and the guiding surface are located on the same curved surface;
the distance between the locking surface and the axis of the locking device gradually decreases in a direction from the initial side to the terminal side, during the valve core closing the passage, the first sidewall abuts against the guiding surface and locking surface in sequence.

7. The valve according to claim 4, wherein the locking surface is curved surface protruding outward in a direction away from an axis of the locking device, the protruding portion has an initial side and a terminal side, the distance between the locking surface and the axis of the locking device gradually decreases in a direction from the initial side to the terminal side.

8. The valve according to claim 4, wherein the protruding portion is connected to the locking device, and the protruding portion further has a stopping surface;
the locking device has a sidewall surface relatively isolated from the locking surface, the stopping surface is connected to the locking surface and the sidewall surface;
when the valve core closes the passage, the locking post partially abuts against the stopping surface.

9. The valve according to claim 2, wherein when the protruding portion is located between the valve core body and the locking post, the protruding portion provides the pulling force in a direction from the inlet to the outlet for the locking post.

10. The valve according to claim 2, wherein the protruding portion fits with the locking post in interference.

11. The valve according to claim 2, wherein the locking device comprises a supporting rod and a locking member, both ends of the supporting rod are fixedly connected to the valve stem and the locking member respectively;
the protruding portion is protrudingly provided on the locking member and surrounds on the out periphery in axial direction of the supporting rod;
the locking post has a connecting portion connected to the valve core body and a locking hook portion connected to the side of the connecting portion away from the valve core body; and the locking hook portion is curvedly connected to the connecting portion and extends towards the side of the locking member facing the supporting rod.

12. The valve according to claim 11, wherein the valve body is provided with a blind hole on a side facing the passage, which is used to receive a portion of the locking member, the protruding portion is located outside the blind hole.

13. The valve according to claim 11, wherein the valve stem is provided with a first mounting hole and a second mounting hole perpendicular to each other, and the first mounting hole partially communicated with the second mounting hole;
the driver is provided with a first mounting post and a second mounting post operatively inserted into the first mounting hole;
the side of the supporting rod facing the valve stem penetrates through the second mounting hole and partially located in the first mounting hole, and the portion of the supporting rod located in the first mounting hole is clamped between the first mounting post and the second mounting post.

14. The valve according to claim 11, wherein the supporting rod rotates with an angle range of 160° to 170° when driven by the valve stem.

15. The valve according to claim 11, wherein when the opening between the valve core and the valve body is maximum, an out contour area of the supporting rod facing the valve core is minimum.

16. The valve according to claim 15, wherein the supporting rod is a cuboid structure, the supporting rod has a pair of opposite first surfaces and a pair of opposite second surfaces, the first side surfaces and the second side surfaces are connected at interval, an area of the first side surface is greater than that of the second side surface;
when the opening between valve core and the valve body is maximum, the second side surfaces face the valve core.

17. The valve according to claim 1, wherein a connecting line between a joint between the connecting member and the valve core body and the locking post passes through the center of the valve core; the locking post has a connecting portion connected to the valve core body and a locking hook portion connected to the side of the connecting portion away from the valve core body; and the locking hook portion is curvedly connected to the connecting portion and extends towards the joint between the connecting member and the valve core body.

18. The valve according to claim 1, wherein the distance from the center of the valve core body to the center of the joint between the locking post and the valve core body is m, the distance from the center of the valve core body to the boundary on the side of the valve core body facing the inlet is n, and a connecting line between the center of the valve core body and the boundary on the side of the valve core body facing the inlet passes through the center of the joint between the locking post and the valve core body; m/n ranges from 1/3 to 2/3.
